# FASCICULE DE BREVET EUROPEEN

(11) **EP 2 247 635 B1**
(45) Date de publication et mention de la délivrance du brevet: **15.03.2017**
(21) Numéro de dépôt: 09715379.5
(22) Date de dépôt: 20.01.2009
(51) Int. Cl.: C08G 18/10, C08G 18/32, C08G 63/00, C08G 64/00, C08G 59/00

(54) **NOUVEAUX ALLONGEURS DE CHAINES POUR FORMULATIONS D'ELASTOMERES DE POLYURETHANES**
NEUARTIGE KETTENVERLÄNGERUNGEN FÜR POYLURETHAN-ELASTOMER-ZUSAMMENSETZUNGEN
NOVEL CHAIN ELONGATORS FOR POLYURETHANE ELASTOMER COMPOSITIONS

(30) Priorité: 25.02.2008 FR 0851171
(43) Date de publication de la demande: 10.11.2010
(73) Titulaire: CECALC, 92700 COLOMBES (FR)
(72) Inventeur: DA COSTA, Georges, F-81710 Saix (FR); ROLLAND, Hervé, F-81100 Castres (FR); MULLER, Daniel, F-94100 Saint Maur (FR)
(74) Mandataire: Lhoste, Catherine
(86) Numéro de dépôt international: PCT/FR2009/050073
(87) Numéro de publication internationale: WO 2009/106774

(56) Documents cités:
- EP-A- 0 033 089
- EP-A- 1 496 074
- WO-A-2006/028647
- US-A- 4 383 051
- US-A1- 2005 143 549
- BRAUN D ET AL: "1,4:3,6-DIANHYDROHEXITE ALS BAUSTEINE FUER POLYMERE//POLYMERS FROM 1,4:3,6-DIANHYDROSORBITOL" JOURNAL FUER PRAKTISCHE CHEMIE, WILEY VCH, WEINHEIM, vol. 334, no. 4, 1 janvier 1992 (1992-01-01), pages 298-310, XP009013817 ISSN: 1436-9966

## Description

L'invention s'inscrit dans le domaine de la préparation d'élastomères. L'invention concerne notamment des mélanges entre l'Isosorbide et le bisphénol A diéthoxylé en tant qu'allongeurs de chaînes dans le domaine des élastomères et plus particulièrement des élastomères polyuréthanes. Les allongeurs de chaînes sont des composés au moins bifonctionnels.

La préparation de polymères élastomères met souvent en oeuvre les composés allongeurs de chaînes qui ont pour fonction d'améliorer certaines propriétés physiques du polymère final, comme sa dureté, sa résistance à la chaleur ou sa résistance à l'hydrolyse.

Les allongeurs de chaînes les plus utilisés dans la préparation des polyuréthanes élastomères sont le butanediol-1,4 ou BDO : 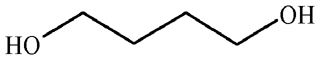 le 1,4-bis[(2-hydroxy éthyl) oxy] benzène ou HQEE : 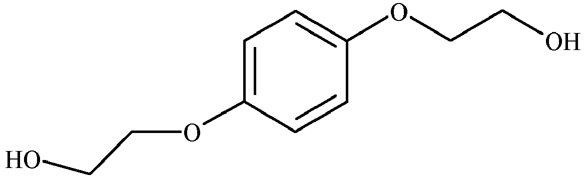 ou le résorcinol diéthoxylé ou HER :

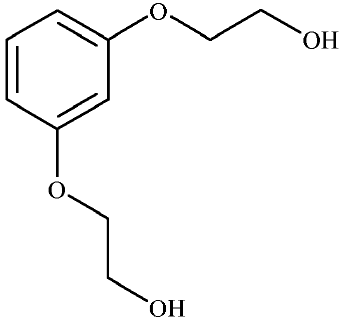

L'utilisation de HQEE ou de HER par rapport au 1,4 Butanediol apporte à l'élastomère une plus grande dureté de part la géométrie de la molécule, mais également une meilleure résistance à la chaleur et à l'hydrolyse.

Malgré les bonnes performances mécaniques qu'il confère, le 1,4 butanediol souffre néanmoins de faiblesses pour certaines applications. Par exemple, il conduit à des produits opaques et n'est pas basé sur des matières premières renouvelables.

La préparation et l'utilisation d'un mélange eutectique HER/Dianol 220 (i.e le bisphénol A diéthoxylé) comme allongeur de chaînes sont décrites dans la demande EP 1496074.

Les avantages d'utilisation de la HER comme allongeur de chaînes dans les polyuréthanes sont mis en avant dans les publications « Lower Durometer TDI elastomers HER extended plasticizer free » - INDSPEC - PMA-CUMA Meeting Toronto (CA) 4-6 nov. 2001 et « Technical bulletin HER, 08.1997 et Technical bulletin HER UTECH 2000, 03.2000 » - INDSPEC.

Les exemples décrits dans la demande de brevet US2006/0293486 décrivent le 1,4 butanediol comme allongeur de chaînes.

Dans la demande de brevet US2007/0073030 est décrite l'originalité d'utilisation de diamines ou diimines comme allongeurs de chaînes dans le domaine des polyuréthanes.

L'Isosorbide est cité, dans le brevet US6946539, comme initiateur possible pour la préparation du poly(trimethylene ether) glycol.

Il y a donc un besoin d'élaborer un allongeur de chaînes apportant une solution aux problèmes vus ci-dessus, tout en conférant des propriétés mécaniques équivalentes ou supérieures à celles obtenues jusqu'à présent en utilisant les allongeurs de chaînes existants sur le marché.

Dans le cadre de ses recherches sur les composés polyalcoxylés, la demanderesse, a développé un nouvel allongeur de chaînes qui améliore de manière surprenante et inattendue les propriétés physiques des polymères polyuréthanes, tout en résolvant les problèmes identifiés ci-dessus.

C'est pourquoi l'invention a pour objet une composition caractérisée en ce qu'elle comprend :
- un composé de formule (I) : 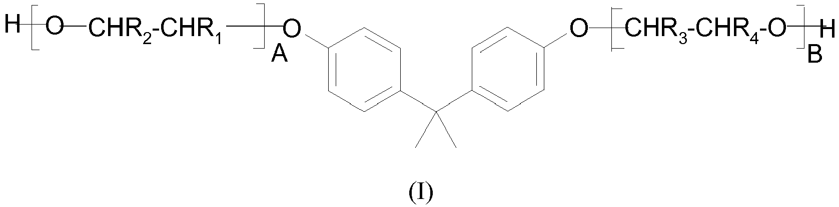
   dans laquelle R₁, R₂, R₃ et R₄ identiques ou différents, représentent indépendamment, les uns des autres un atome d'hydrogène, un radical méthyle ou un radical éthyle,
   A et B identiques ou différents, représentent indépendamment l'un de l'autre un nombre compris entre 0 et 10 étant entendu que la somme A + B est supérieure à zéro, et
- un composé de formule (II) :

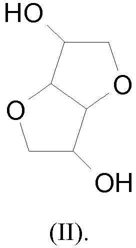

Le composé de formule (II), c'est-à-dire l'Isosorbide, est un produit basé sur des matières premières renouvelables, comme par exemple le sorbitol issu de l'amidon de blé, de maïs ou de pomme de terre.

Dans la formule (I) telle que définie précédemment, les radicaux :
-O-CHR₂-CHR₁-, -CHR₃-CHR₄-O-, représentent plus particulièrement, indépendamment l'un de l'autre un des radicaux divalents suivants :
   -O-CH₂-CH₂-, -CH₂-CH₂-O, -O-CH₂-CH(CH₃)-, -CH₂-CH(CH₃)-O-, -O-CH(CH₃)-CH₂-, CH(CH₃)-CH₂-O-, -O-CH(C₂H₅)-CH₂-, -CH(C₂H₅)-CH₂-O-, -O-CH₂-CH(C₂H₅)- ou -CH₂-CH(C₂H₅)-O-.

Au sein de chacun des groupes -[O-CHR₂-CHR₁]_{A}-, -[CHR₃-CHR₄-O]_{B}-, les radicaux -O-CH₂-CH₂-, -O-CH₂-CH(CH₃)-, -O-CH(CH₃)-CH₂-, -O-CH(C₂H₅)-CH₂-, -O-CH₂-CH(C₂H₅)-, -CH₂-CH₂-O, -CH₂-CH(CH₃)-O-, -CH(CH₃)-CH₂-O-, -CH(C₂H₅)-CH₂-O- ou -CH₂-CH(C₂H₅)-O-, sont distribués de façon séquencée ou aléatoire.

Selon un aspect plus particulier, l'invention a pour objet une composition caractérisée en ce que, pour 100% en poids, elle consiste en un mélange d'au moins un composé de formule (I) et d'au moins un composé de formule (II).

Selon un aspect particulier, l'invention a pour objet une composition telle que définie précédemment, pour laquelle dans la formule (I), R₁, R₂, R₃ et R₄, représentent chacun un atome d'hydrogène.

Selon encore un autre aspect particulier, l'invention a pour objet une composition telle que définie précédemment, comprenant de 30 % en poids à 90% en poids de composé de formule (I) et de 10% en poids à 70 % en poids de composé de formule (II) et de préférence contenant de 45% en poids à 85 % en poids de composé de formule (I) et de 15 % en poids à 55 % en poids de composé de formule (II).

L'invention a tout particulièrement pour objet une composition telle que définie précédemment dans laquelle le composé de formule (I) est le bisphénol A diéthoxylé de formule (Ia) :

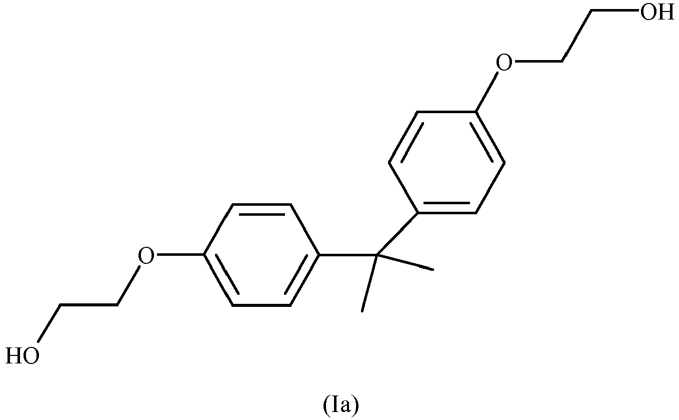

De préférence l'invention a pour objet une composition contenant 50 % en poids de composé de formule (Ia) et 50 % en poids de composé de formule (II).

Selon un autre aspect, l'invention a aussi pour objet, l'utilisation de la composition telle que définie précédemment comme allongeur de chaîne dans une formulation élastomère de polyuréthanes.

Les matériaux élastomères polyuréthanes sont généralement obtenus par réaction :
- d'un di-isocyanate, par exemple TDI (toluène diisocyanate), MDI (4,4' diphénylméthane diisocyanate), ou HDI (hexyl diisocyanate) ;
- d'un diol long ou mélange de diols longs, comme par exemple un polyether polyol, un polyester polyol, un polybutadiène polyol, un polypropylène glycol, un polyéthylène glycol, un poly(tétraméthylène) glycol, un polycaprolactone, ou encore des poly alcools possédant des hydrogènes actifs ;
- d'un allongeur de chaîne ;
- d'un agent débullant (par exemple des solutions de polysiloxanes détruisant les mousses comme par exemple les produits commercialisés par la société BYK Chemie sous les appellations BYK A506 et BYK A530), de catalyseurs (par exemple des catalyseurs des réactions OH/NCO comme les trialkylamines (tetraméthylbutanediamine, bis (2-dimethylaminoethyl)ether, etc.), les polyamines aliphatiques, les bases de Mannich, le diazabicyclooctane (DABCO), le diazabicyclo undecene (DBU), les sels d'étains (octoate d'étain, dibutyl laurate d'étain, etc.), les sels de mercure, les sels de zinc, les sels de plomb, les sels de calcium, les sels de magnésium, la N-alkyl morpholine, les phosphines, les carboxylates (carboxyalte de magnésium, de potassium, d'aluminium, etc.), et mélanges de ces divers composés) et autres additifs.

Selon un autre aspect, l'invention a aussi pour objet, un procédé de préparation d'une formulation élastomère de polyuréthane à partir de prépolymères isocyanates et d'une quantité efficace d'allongeur de chaînes, caractérisé en ce que ledit allongeur de chaînes est la composition telle que définie précédemment. Par quantité efficace d'allongeur de chaînes, on entend entre 5% et 30%, de préférence entre 10% et 20% et de préférence encore entre 12% et 18% d'allongeur de chaînes.

Pour obtenir des matériaux élastomères polyuréthanes, plusieurs procédés distincts sont possibles :
- Un procédé dit « One shot » est envisageable. Au cours de ce procédé tous les composants cités ci-dessus sont ajoutés en une seule étape.
- De manière préférée, un procédé avec passage par un pré-polymère est employé. Il s'agit d'une réaction en 2 étapes. Au cours de la première étape on fait réagir le diol long ou mélange de diols longs avec un diisocyanate en excès pour obtenir un « pré-polymère » possédant des fonctions isocyanates.

De préférence, sont utilisés les diols essentiellement linéaires qui, excepté les groupes d'hydroxyle aux extrémités, ne portent aucun autre groupe réagissant avec des isocyanates. Ces diols ont un poids moléculaire compris entre 500 et 10.000 g.mol⁻¹, de préférence 700 et 5000 g.mol⁻¹, avec la préférence spéciale pour la gamme de 1000 à 3000 g.mol⁻¹. Le poids moléculaire est signifié comme poids moléculaire moyen. De manière préférée on utilise les polyesters, les polyéthers glycols, les glycols de polyalkylène, par exemple le polyéthylène glycol, le glycol de polypropylène et/ou glycol de poly-tétra-méthylène. Le glycol de poly-tétra-méthylène, également connu sous le nom de poly-tétra-hydrofurane, peut être produit par polymérisation ionique de tétrahydrofurane avec des catalyseurs acides. Des copolymères appropriés sont également obtenus en polymérisant le tétrahydrofurane avec un mélange d'oxyde de propylène, d'oxyde d'éthylène et de glycols.

Ce procédé est l'un des plus utilisés et de nombreux pré-polymères commerciaux sont proposés, comme par exemple VIBRATHANE^{™} commercialisé par la société CHEMTURA, BAYTEC^{™} commercialisé par la société BAYER, SUPRASEC^{™} commercialisé par la société HUNTSMAN, LUPRANATE^{™} commercialisé par la société BASF etc. Un pré-polymère isocyanate se caractérise par son pourcentage de NCO.
- Le procédé « Quasi pré-polymère » se rapproche du procédé « pré-polymère » mais dans ce cas on ne fait réagir qu'une partie du diol long et non la totalité.

Selon un autre aspect, l'invention a pour objet, l'utilisation de la composition telle que définie précédemment, comme monomère dans la préparation de polyesters saturés ou insaturés, de polycarbonates ou de résines époxy.

L'exposé suivant illustre l'invention sans toutefois la limiter.

Les mélanges mentionnés ci-après ont été préparés de la façon suivante :
- Fonte du composé de formule (II) à 65-70°C.
- Ajout progressif du composé de formule (I), les mélanges sont portés à 90-95°C pour une meilleure homogénéisation. Tous les mélanges sont limpides et homogènes à 95°C.
- Séchage des mélanges.
- Observation de l'homogénéité du mélange (compatibilité des deux composés).

Trois compositions selon l'invention sont ainsi préparées, dont les caractéristiques sont consignées dans le tableau 1 suivant.

**Tableau 1**

| **N° essai** | **Composé I / 1,4 Butanediol** | **Composé I/Composé II** | **Composé I/Composé II** | **Composé I / Composé II** |
|---|---|---|---|---|
| | **(50/50)** | **(50/50)** | **(70/30)** | **(80/20)** |
| | **Base de comparaison Composition 0** | **Composition 1** | **Composition 2** | **Composition 3** |
| Rapport massique (%) | 50/50 | 50/50 | 70/30 | 80/20 |
| Rapport molaire (%) | 22/78 | 31,2/68,8 | 51,5/48,5 | 64,5/35,5 |
| PM moyen du mélange (g/mol) | 140,5 | 200,5 | 235,7 | 258,3 |
| I OH du mélange (par calcul) en mg KOH/g | 798,6 | 559,5 | 476,1 | 434,4 |
| Aspect à 25°C | Solide | Liquide en surfusion | Solide | Solide |
| 40°C | solide | Liquide homogène | Solide | Solide |
| 60°C | solide | Liquide homogène | Liquide homogène | Solide |
| 80°C | liquide | Liquide homogène | Liquide homogène | Liquide homogène |
| Viscosité LVT à 25°C | - | 11 280 cPs | - | - |
| 40°C | - | 2150 cPs | - | - |
| 60°C | - | 1 050 caps | 775 cPs | - |
| 80°C | 24 cPs | 252 cPs | 160 cPs | 213 cPs |
| Point de fusion des mélanges | < 80°C | < 80°C | 87°C | 96°C |
| réalisé sur METTLER FP 300 | | | | |

On prépare ensuite 6 compositions élastomères en polyuréthane dont les paramètres sont consignés dans le tableau 2 suivant, à partir :
- du Vibrathane™ B625, commercialisé par la société CHEMTURA, qui est un prépolymère isocyanate ayant un pourcentage en fonction isocyanate (-N-C=O) compris entre 6,2 et 6,9 ;
- d'un allongeur de chaîne selon l'invention, correspondant aux compositions 1 à 3 du tableau 1, respectivement pour les formulations 3 à 5 ;
- d'un allongeur de chaîne selon l'état de la technique : le butanediol 1,4 pour la formulation 1, une composition E comprenant 52% en poids de résorcinol diéthoxylé et 48% en poids de bisphénol A diéthoxylé pour la formulation 2, et la composition 0 pour la formulation 0.

Les résultats suivants sont également en accord avec des procédés mettant en oeuvre d'autres prépolymères isocyanates que le Vibrathane^{™}, d'autres diisocyanates et d'autres diols longs, comme ceux décrits précédemment.

Le mode opératoire à suivre pour la synthèse de ces élastomères est le suivant :
1- Porter le prépolymère à la température de 85°C puis le dégazer.
2- Préparer les moules en les enduisant d'un agent démoulant, les placer dans une étuve à la température de 120°C.
3- Préparer une teneur en eau préalable de l'allongeur de chaîne, si la teneur en eau est supérieure à 800 ppm il faut prévoir une déshydratation de l'allongeur de chaîne.
4- Chauffer le mélange de diol/triol à 85°C puis le dégazer.
5- Peser la quantité de prépolymère nécessaire à l'essai dans un bécher, ajouter l'agent débullant BYK A530 et enfin ajouter la quantité exacte d'allongeur de chaîne.
6- Mélanger. Durée agitation = 30 secondes, vitesse agitation = 1000 tr/mn. Le type de pâles pour les différents mélanges restera toujours le même.
7- Placer le bécher dans la cloche à vide et commencer le dégazage du mélange. Sortir les moules de l'étuves et effectuer immédiatement la coulée du mélange dans ceux ci.
8- Placer les moules remplis dans l'étuve à la température de 120°C. Observer le comportement du produit restant dans le bécher et visualiser le pot.
9- Démouler, suivant les allongeurs de chaînes, puis observer si la plaque est cuite ou non. Replacer la plaque à l'étuve pour une post cuisson.
10- Sortir la plaque de l'étuve et la laisser vieillir (maturation) avant d'effectuer les tests physiques selon les normes ISO existantes.

**Tableau 2**

| **Formulation** | **Formulation 1 (base de comparaison)** | **Formulation 2 (base de comparaison)** | **Formulation 3 (invention)** | **Formulation 4 (invention)** | **Formulation 5 (invention)** | **Formulation 0 (base de comparaison)** |
|---|---|---|---|---|---|---|
| Vibrathane (% NCO : 6029) | 100 g | 100g | 100g | 100g | 100g | 100g |
| Vibrathane (% NCO : 6029) | | | | | | |
| Butanediol-1,4 | 6,41 g | 0 | 0 | 0 | 0 | 5,07 g |
| composition E | 0 | 7,39 g | | | | |
| Composé I | 0 | 3,55 g | 7,23 g | 11,9 g | 14,91 g | 0 |
| Composé II | 0 | 0 | 7,23 g | 5,1 g | 3,72 g | 5,07 g |
| BYK™ A 530 | 0,5 g | 0,5 g | 0,5 g | 0,5 g | 0,5 g | 0,5 g |
| (agent débullant) | | | | | | |
| Durée de vie en pot | 6 minutes | 21 minutes | 8 minutes | 8 minutes | 8 minutes | 9 minutes |

| **Paramètres de procédé** | | | | | | |
|---|---|---|---|---|---|---|
| Température du prépolymère | 85 °C | 85 °C | 85 °C | 85 °C | 85 °C | 85°C |
| Température de l'allongeur | 85 °C | 85 °C | 85 °C | 85 °C | 85 °C | 95°C |
| Température de cuisson | 120 °C | 120 °C | 120 °C | 120 °C | 120 °C | 120°C |
| Temps d'agitation | 30 minutes | 30 minutes | 30 minutes | 30 minutes | 30 minutes | 30 minutes |
| Temps de cuisson | 4 heures | 4 heures | 4 heures | 4 heures | 4 heures | 4 heures |
| Temps de post cuisson | 16 heures | 16 heures | 16 heures | 16 heures | 16 heures | 16 heures |
| temps de maturation | 6 jours | 6 jours | 6 jours | 6 jours | 6 jours | 6 jours |
| Aspect visuel de la formulation finale | opaque | opaque | Transparente | Transparente | Transparente | Opaque |

Durée de vie en pot : temps durant lequel le mélange est utilisable sans augmentation importante de la viscosité.

On évalue les propriétés mécaniques de chacune des formulations 1 à 5, les résultats sont consignés dans le tableau 3 suivant :

**Tableau 3 :**

| | **Formulation 1** | **Formulation 2 (comparaison)** | **Formulation 3 (invention)** | **Formulation 4 (invention)** | **Formulation 5 (invention)** | **Formulation 0 (comparaison)** |
|---|---|---|---|---|---|---|
| Dureté (selon la norme ISO 868) | 84 | 87 | 84 | 78 | 73 | 82,5 |
| Propriétés en traction (selon la norme ISO 37) Contrainte à 100% | 6,15 MPa | 7,34 MPa | 5,47 MPa | 3,14 MPa | 2,59 MPa | 5,08 Mpa |
| Propriétés en traction (selon la norme ISO 37) Contrainte à 200% | 9,16 MPa | 10,11 MPa | 8,06 MPa | 4,94 MPa | 4,68 MPa | 8,12 Mpa |
| Propriétés en traction (selon la norme ISO 37) Contrainte à 300% | 12,78 MPa | 12,93 MPa | 11,2 MPa | 8,41 MPa | 9,2 MPa | 13,9 Mpa |
| Propriétés en traction (selon la norme ISO 37) Contrainte à la rupture | 20,01 MPa | 18,15 MPa | 18,15 MPa | 24,30 MPa | 14,68 MPa | 16,4 Mpa |
| Propriétés en traction (selon la norme ISO 37) Elongation à la rupture | 450% | 485% | 460% | 430% | 380% | 325% |
| Propriétés en traction (selon la norme ISO 37) Module d'Young | 16,88 MPa | 22.15 MPa | 23,81 MPa | 18,34 MPa | 9,94 MPa | 13,80 Mpa |
| Résistance à la déchirure (selon la norme ISO 34) | 44,43 kN/m | 69,63 kN/m | 63,72 kN/m | 56,80 kN/m | 38,81 kN/m | 48,3 kN/m |
| Vertical Rebound (ASTM D2632) | 54 | - | 45 | 41 | 37 | 50 |

Ces résultats font clairement apparaître les avantages qu'il y a à utiliser les allongeurs de chaînes selon l'invention par rapport à la composition E et au butanediol-1,4, produits utilisés jusqu'à maintenant dans cette fonction.

En effet, les mélanges composé I / composé II selon l'invention conduisent à des matériaux transparents lorsqu'ils ont utilisés comme allongeurs de chaînes.

De plus, pour une partie, ils sont basés sur des matières premières renouvelables.

En particulier, le mélange composé I / composé II (50/50 massique) permet d'obtenir un matériau transparent avec des propriétés mécaniques similaires voir supérieures à la référence du marché, le 1,4 butanediol. Ce mélange comporte en outre au moins 50% de produits renouvelables. Les matériaux obtenus avec ce mélange présentent une résistance à la déchirure 30% supérieure à celle des matériaux obtenus avec un allongeur de chaîne tel que le 1,4 butanediol.

De manière inattendue, d'autres avantages sont mis en évidence par l'utilisation de compositions selon l'invention comme allongeurs de chaînes dans une formulation élastomère.

Par exemple, l'incorporation d'Isosorbide avec un composé de formule I permet une baisse du point de fusion dans le domaine d'utilisation des allongeurs de chaînes (température de mélange = 80°C) : pour le mélange 50/50 nous obtenons un point de fusion inférieur à 80°C : température d'utilisation des allongeurs de chaînes.

L'incorporation d'un diol comme l'Isosorbide avec un composé de formule I dans une formulation élastomère de polyuréthanes permet d'augmenter sensiblement les propriétés mécaniques de l'élastomère. Le mélange composé I / composé II donne des performances très proches de celles obtenues avec l'Isosorbide seul.

L'utilisation d'un mélange d'allongeurs de chaînes présentant une structure aromatique permet de conférer à l'élastomère polyuréthane synthétisé une ténacité face au vieillissement en température et à l'hydrolyse.

Les élastomères réalisés avec les mélanges composé I / composé II sont tous transparents. L'utilisation de ces mélanges comme allongeurs de chaînes dans une application « holt melt polyuréthane », c'est-à-dire d'adhésif thermo fusible, peut s'avérer intéressante.

## Revendications

1. Composition **caractérisée en ce qu'**elle comprend :
- de 30 % en poids à 90% en poids d'un composé de formule (I) : 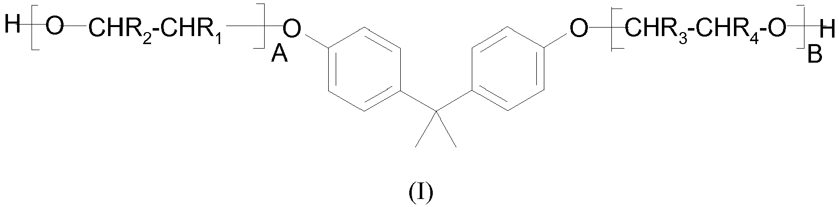
dans laquelle R₁, R₂, R₃ et R₄ identiques ou différents, représentent indépendamment, les uns des autres un atome d'hydrogène, un radical méthyle ou un radical éthyle,
A et B identiques ou différents, représentent indépendamment l'un de l'autre un nombre compris entre 0 et 10 étant entendu que la somme A + B est supérieure à zéro,
et
- et de 10% en poids à 70 % en poids d'un composé isosorbide de formule (II) :

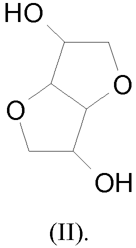

2. Composition telle que définie précédemment, pour laquelle dans la formule(I), R₁, R₂, R₃ et R₄, représentent chacun un atome d'hydrogène.

3. Composition telle que définie à l'une des revendications 1 et 2, comprenant de 45% en poids à 85 % en poids de composé de formule (I) et de 15 % en poids à 55 % en poids de composé isosorbide de formule (II).

4. Composition telle que définie à l'une des revendications 1 à 3, dans laquelle le composé de formule (I) est le bisphénol A diéthoxylé de formule (Ia) :

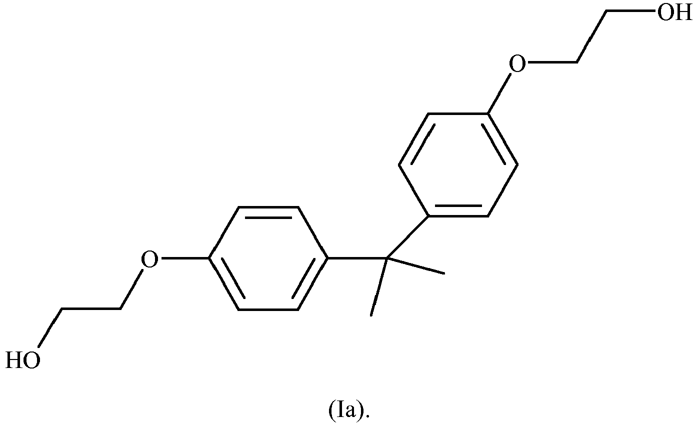

5. Composition telle que définie à la revendication 4, contenant 50 % en poids de composé de formule (Ia) et 50 % en poids de composé isosorbide de formule (II).

6. Procédé de préparation d'une composition telle que définie à l'une des revendications 1 à 5, comprenant les étapes :
- étape a) = fonte du composé isosorbide de formule (II),
- étape b) = ajout progressif du composé de formule (I), au composé isosorbide de formule (II) issu de l'étape a),
- étape c) = séchage des mélanges issus de l'étape b).

7. Utilisation de la composition telle que définie à l'une des revendications 1 à 5, comme allongeur de chaînes dans une formulation élastomère de polyuréthane.

8. Procédé de préparation d'une formulation élastomère de polyuréthane à partir de prépolymères isocyanates et d'une quantité efficace d'allongeur de chaînes, **caractérisé en ce que** ledit allongeur de chaînes est la composition telle que définie à l'une des revendications 1 à 5.

9. Utilisation de la composition telle que définie à l'une des revendications 1 à 5, comme monomère dans la préparation de polyesters saturés ou insaturés, de polycarbonates ou de résines époxy.

10. Elastomère polyuréthane comprenant un allongeur de chaîne, **caractérisé en ce que** ledit allongeur de chaîne est la composition telle que définie à l'une des revendications 1 à 5.

## Patentansprüche

1. Zusammensetzung, **dadurch gekennzeichnet, dass** sie Folgendes umfasst:
- 30 Gew.% bis 90 Gew.% einer Verbindung der Formel (I): 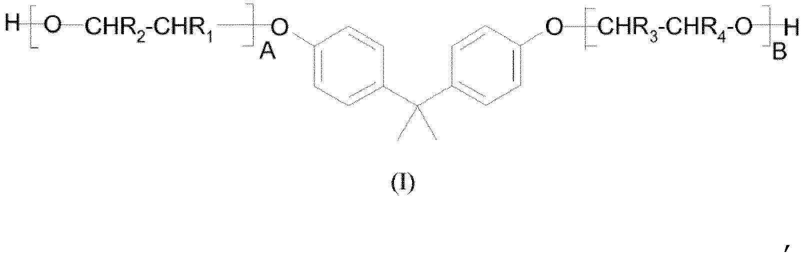
wobei R₁, R₂, R₃ und R₄, die gleich oder verschieden sind, unabhängig voneinander ein Wasserstoffatom, einen Methylrest oder einen Ethylrest darstellen,
A und B, die gleich oder verschieden sind, unabhängig voneinander eine Zahl zwischen 0 und 10 darstellen, vorausgesetzt, dass die Summe A + B größer als Null ist,
und
- und 10 Gew.% bis 70 Gew.% einer Isosorbid-Verbindung der Formel (II):

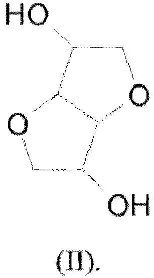

2. Zusammensetzung wie zuvor definiert, wobei R₁, R₂, R₃ und R₄ in der Formel (I) jeweils ein Wasserstoffatom darstellen.

3. Zusammensetzung, wie in einem der Ansprüche 1 und 2 definiert, umfassend 45 Gew.% bis 85 Gew.% der Verbindung der Formel (I) und 15 Gew.% bis 55 Gew.% Isosorbid-Verbindung der Formel (II).

4. Zusammensetzung, wie in einem der Ansprüche 1 bis 3 definiert, wobei die Verbindung der Formel (I) das Bisphenol A-diethoxylat der Formel (Ia) ist:

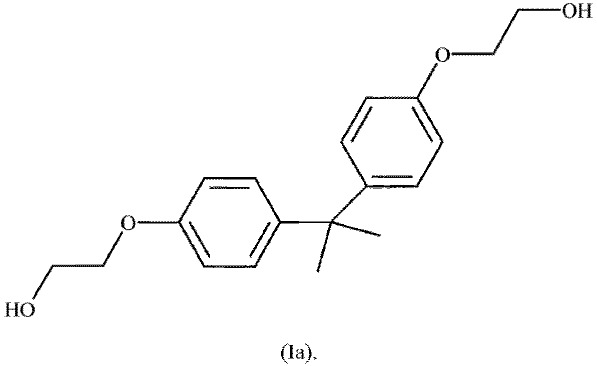

5. Zusammensetzung, wie in Anspruch 4 definiert, umfassend 50 Gew.% der Verbindung der Formel (Ia) und 50 Gew.% Isosorbid-Verbindung der Formel (II).

6. Verfahren zur Herstellung einer Zusammensetzung, wie in einem der Ansprüche 1 bis 5 definiert, umfassend die folgenden Schritte:
- Schritt a) = Schmelzen der Isosorbid-Verbindung der Formel (II),
- Schritt b) = schrittweises Hinzufügen der Verbindung der Formel (I) zu der Isosorbid-Verbindung der Formel (II), die aus dem Schritt a) hervorgegangen ist,
- Schritt c) = Trocknen der Gemische, die aus dem Schritt b) hervorgegangen sind.

7. Verwendung der Zusammensetzung, wie in einem der Ansprüche 1 bis 5 definiert, als Kettenverlängerer in einer Polyurethanelastomerformulierung.

8. Verfahren zur Herstellung einer Polyurethanelastomerformulierung aus Isocyanatprepolymeren und einer wirksamen Menge an Kettenverlängerer, **dadurch gekennzeichnet, dass** der Kettenverlängerer die Zusammensetzung ist, wie in einem der Ansprüche 1 bis 5 definiert.

9. Verwendung der Zusammensetzung, wie in einem der Ansprüche 1 bis 5 definiert, als Monomer bei der Herstellung von gesättigten oder ungesättigten Polyestern, von Polycarbonaten oder von Epoxidharzen.

10. Polyurethanelastomer, umfassend einen Kettenverlängerer, **dadurch gekennzeichnet, dass** der Kettenverlängerer die Zusammensetzung ist, wie in einem der Ansprüche 1 bis 5 definiert.

## Claims

1. Composition **characterized in that** it comprises:
- from 30% by weight to 90% by weight of a compound of formula (I): 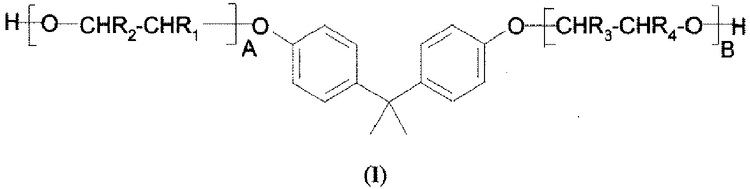
in which R₁, R₂, R₃ and R₄ are identical or different and represent, independently of one another, a hydrogen atom, a methyl radical or an ethyl radical and
A and B are identical or different and represent, independently of each other, a number between 0 and 10, it being understood that the sum A + B is greater than zero; and
- and from 10% by weight to 70% by weight of an isosorbide compound of formula (II):

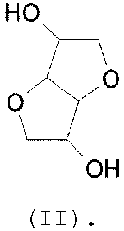

2. Composition as defined above, for which R₁, R₂, R₃ and R₄ each represent a hydrogen atom in formula (I).

3. Composition as defined in either of Claims 1 and 2, comprising from 45% by weight to 85% by weight of the compound of formula (I) and from 15% by weight to 55% by weight of the isosorbide compound of formula (II).

4. Composition as defined in one of Claims 1 to 3, in which the compound of formula (I) is diethoxylated bisphenol A of formula (Ia):

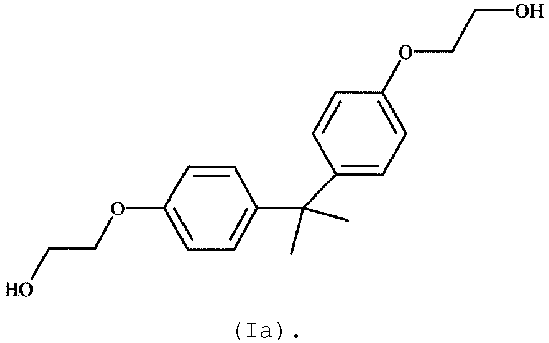

5. Composition as defined in Claim 4, containing 50% by weight of the compound of formula (Ia) and 50% by weight of the isosorbide compound of formula (II).

6. Method of preparing a composition as defined in one of Claims 1 to 5, comprising the following steps:
- step a) in which the isosorbide compound of formula (II) is melted;
- step b) in which the compound of formula (I) is progressively added to the isosorbide compound of formula (II) resulting from step a); and
- step c) in which the mixtures resulting from step b) are dried.

7. Use of the composition as defined in one of Claims 1 to 5 as chain extender in a polyurethane elastomer formulation.

8. Process for preparing a polyurethane elastomer formulation from isocyanate prepolymers and an effective amount of a chain extender, **characterized in that** said chain extender is the composition as defined in one of Claims 1 to 5.

9. Use of the composition as defined in one of Claims 1 to 5 as monomer in the preparation of saturated or unsaturated polyesters, the preparation of polycarbonates or the preparation of epoxy resins.

10. Polyurethane elastomer that includes a chain extender, **characterized in that** said chain extender is the composition as defined in one of Claims 1 to 5.
